# EUROPÄISCHE PATENTANMELDUNG

(11) **EP 1 902 615 A1**
(43) Veröffentlichungstag der Anmeldung: **26.03.2008**
(21) Anmeldenummer: 06019698.7
(22) Anmeldetag: 20.09.2006
(51) Int. Cl.: A01K 15/02

(54) **Bewegbare Futtervorrichtung insbesondere für Raufutter**

(71) Anmelder: Skupin, Sabine, 23560 Lübeck (DE)
(72) Erfinder: Skupin, Sabine, 23560 Lübeck (DE)
(74) Vertreter: Hemmer, Arnd

(57) **Zusammenfassung**

Die Erfindung betrifft eine Futtervorrichtung zum Füttern von Raufutter mit einem Behälter zur Aufnahme des Raufutters, in dessen Außenhaut (1) Entnahmeöffnungen (4; 23) zur Entnahme des Raufutters ausgebildet sind, wobei die Futtervorrichtung bewegbar ist und die Entnahmeöffnungen (4 ; 23) derart geformt und dimensioniert sind, dass Raufutter nicht von selbst aus dem Behälter herausfallen kann und die Entnahmeöffnungen (4 ; 23) an Maulform- und -größe des Tieres, zu dessen Fütterung die Futtervorrichtung vorgesehen ist, angepasst sind, so dass das Raufutter für das Tier mit dem Maul durch die Entnahmeöffnungen (4 ; 23) entnehmbar ist.

## Beschreibung

Die Erfindung betrifft eine Vorrichtung entsprechend dem Oberbegriff des Anspruchs 1.

Für die Fütterung von Tieren mit Raufutter gibt es die Möglichkeit feste Vorrichtungen wie beispielsweise eine Heuraufe zu benutzen oder aber das Futter direkt auf den Boden zu legen. Vereinzelt werden aber auch von Tierhaltern Behältnisse zur Fütterung benutzt, die durch eine einfache Bauweise (z.B. aufgeschnittene Kanister) ein erhebliches Unfallrisiko für das Tier darstellen können. Bei der Fütterung durch eine Heuraufe ist es dem Tier meist nicht möglich, sich während der Nahrungsaufnahme z.B. um den Futterplatz zu bewegen oder fortzuschreiten, was der natürlichen Nahrungsaufnahme entspräche. Zudem wird das Tier während der Nahrungsaufnahme nicht angeregt/gefordert, so dass die Tiere verhaltensauffällig werden können. Die Bodenfütterung hat den Nachteil, dass durch Verunreinigungen Magen-Darm-erkrankungen auftreten können, wie sie beispielsweise bei Pferden sehr häufig sind. Weiterhin können die bei der Bodenfütterung aufgenommen Portionen zu groß sein, so dass es nicht zu einer ausreichenden Speichelbildung kommt, was wiederum Magen-Darmerkrankungen begünstigt. Futtervorrichtungen einfacher Bauart, haben den Nachteil, dass sich z.B. durch scharfkantiges und/oder splitterndes Material Schnittverletzungen ergeben können.

Aufgabe der Erfindung ist es, eine Vorrichtung zu schaffen, die das Futter weitgehend vor Verunreinigungen schützt, die Futteraufnahmezeit verlängert, sowie eine Beschäftigungsmöglichkeit für das Tier darzustellen kann.

Diese Aufgabe wird durch eine Futtervorrichtung mit dem im Anspruch 1 angegebenen Merkmalen gelöst. Bevorzugte Ausfürhungsformen ergeben sich aus den Unteransprüchen.

Die erfindungsgemäße Futtervorrichtung ist zum Füttern von Raufutter, d. h. insbesondere Heu, Stroh und ähnlichem an Tiere, beispielsweise Pferde oder Ponys vorgesehen. Die erfindungsgemäße Futtervorrichtung weist einen Behälter zur Aufnahme des Raufutters auf. In der Wandung bzw. Außenhaut des Behälters sind Entnahmeöffnungen ausgebildet, durch welche das Tier das Raufutter entnehmen kann. Erfindungsgemäß soll die Futtervorrichtung bzw. der Behälter bewegbar ausgebildet sein. Ferner sind die Entnahmeöffnungen derart geformt und dimensioniert, dass das Raufutter im wesentlichen nicht von selbst, beispielsweise durch Einwirkung der Schwerkraft, aus dem Behälter herausfallen kann. Dadurch wird sichergestellt, dass das Raufutter, solange das Tier nicht frisst, geschützt im Inneren des Behälters angeordnet ist. Gleichzeitig sind die Entnahmeöffnungen so geformt und dimensioniert, dass sie an die Maulform des Tieres, zu dessen Fütterung die Futtervorrichtung vorgesehen ist, angepasst sind. So können die Entnahmeöffnungen beispielsweise an die Maulform und Größe eines Pferdes angepasst sein. Die Anpassung erfolgt derart, dass die Entnahmeöffnungen so gestaltet sind, dass das Tier mit dem Maul durch die Entnahmeöffnungen das Raufutter im Inneren des Behälters ergreifen und herausziehen kann. Bevorzugt ist somit die Futtervorrichtung an eine bestimmte Tierart angepasst, indem die Entnahmeöffnungen an die Maulform und Größe der jeweiligen Tierart angepasst sind, sodass gerade diese Tierart das Futter gut durch die Entnahmeöffnungen ergreifen bzw. fressen kann.

Bevorzugt sind am Außenumfang des Behälters Abweiser bzw. Abstandshalter ausgebildet. Diese dienen dazu, dass der Behälter, wenn er auf dem Boden liegt, mit Abstand zum Boden gehalten wird, sodass die Behälterwandung bzw. Behälteraußenhaut nicht direkt auf dem Boden aufliegt. So können Verunreinigungen des Futters verhindert werden. Besonders bevorzugt sind punkt- oder stabförmige Abstandshalter vorgesehen. Ferner können die Abstandshalter versetzt zueinander angeordnet sein, so dass die kontinuierliche Abrollbewegung des Behälters auf dem Boden unterbunden wird. Der Behälter kippt bei Bewegung um die Abstandshalter, so dass seine Rotation begrenzt ist.

Weiter bevorzugt weist der Behälter bzw. die Vorrichtung zumindest eine Befestigungseinrichtung auf, mit welcher der Behälter beweglich befestigt werden kann. Dies kann beispielsweise eine Befestigung durch eine Welle sein.

Der Behälter ist ferner vorzugsweise zylindrisch ausgebildet.

Insbesondere bei einer solchen Ausgestaltung ist der Behälter vorzugsweise um eine Achse, insbesondere eine Längsachse drehbar, um die Bewegbarkeit des Behälters zu erreichen.

Gemäß seiner besonderen Ausführungsform kann der Behälter an einer Halteeinrichtung bewegbar, insbesondere drehbar gelagert sein. So kann der Behälter in der Halteeinrichtung beispielsweise auch in einer gewissen Höhe angeordnet werden, in welchem er gut von dem zu fütternden Tier zu erreichen ist. Alternativ kann der Behälter auch einfach beweglich auf dem Boden liegen, insbesondere ohne weitere Befestigung frei auf dem Boden liegen.

Ferner weist der Behälter bzw. die Vorrichtung zumindest eine Befüllöffnung zum Beladen bzw. Einfüllen von Raufutter auf. Diese Öffnung ist vorzugsweise entsprechend größer als die Entnahmeöffnungen ausgebildet, sodass sich das Raufutter schnell und leicht in das Innere des Behälters einfüllen lässt.

Die Aufgabe das Futter vor Verunreinigungen zu schützen, wird dadurch gelöst, dass sich das Futter in einer teilweise geschlossenen Vorrichtung bzw. einem teilweise geschlossenen Behälter befindet. Wird diese Vorrichtung am Boden genutzt, kann die Vorrichtung mit Abweisern vom Boden fern gehalten werden. Bei bodenferner Nutzung werden Verunreinigungen durch eine erhöhte Anbringung verhindert. Erhebungen, wie auch Ausbuchtungen auf der Vorrichtung können bei dieser Nutzungsform den Spieltrieb wecken. Damit das Futter nicht nur am tiefsten Punkt der Vorrichtung zum Liegen kommt, können im Innern der Vorrichtung Sperren, wie Schaufeln, eine Welle o.ä. angebracht werden. Durch der Sperre wird zusätzlich verhindert, dass das Futter sich am tiefsten Punkt des Behälters sammelt und dort dann nach außen austritt. Um die Stabilität der Vorrichtung zu erhöhen, können Querstreben o.ä. eingezogen oder ein bestimmter Druckzustand im Innern oder der Wand der Vorrichtung hergestellt werden. An das Tier angepasste Futteröffnungen gewährleisten kleinere Futterportionen und damit eine Anregung der Kautätigkeit. Das Risiko von Schnittverletzungen kann durch aufgeworfene Futteröffnungen, eine angepasste Größe und entsprechendes Material minimiert werden. Um einen leichteren Transport zu ermöglichen, können entsprechende Ausbuchtungen zum Tragen oder Anbringungsmöglichkeiten für Gurte o.ä. geschaffen werden. Die Befüllung der Vorrichtung kann z.B. am Kopfende durch Deckel mit mindestens einem Spannverschluss oder Drehverschluss o.ä. erfolgen. Öffnungen sind auch längsseits möglich, beispielhaft können das wiedereinsetzbare Teile, Türen o.ä. sein.

Die Öffnungen zur Futterentnahme sind in ihrer Größe und Form so angepasst, dass das Tier, beispielsweise ein Pferd, mit seinem Maul in die Öffnung eindringen kann, um Futter aus dem Inneren der Vorrichtung herauszuziehen. Gleichzeitig sind die Öffnungen so dimensioniert, dass sie auch an das Futter angepasst sind, sodass dieses ohne Einwirkung des Tieres im wesentlichen nicht aus der Vorrichtung herausfallen kann. Die Vorrichtung ist für Raufutter vorgesehen. Demgemäß sind die Öffnungen in Form und Größe so angepasst, dass das Raufutter vom Tier aus den Öffnungen herausgezogen werden muss.

Ferner sind die Öffnungen in Form und Größe vorzugsweise so dimensioniert und geformt, dass das Tier nicht mit seinem Huf in die Öffnung eindringen und sich dort verfangen kann.

Durch die Erfindung können Magen-Darm- und Parasitenerkrankungen verringert und die Haltungskosten durch geringeren Rauhfuttereinsatz reduziert werden. Durch entsprechende Abstände der Futtervorrichtungen untereinander können Rangauseinandersetzungen verringert werden. Die Tiere sind länger beschäftigt, was zu mehr Ausgeglichenheit und damit zu einem sichereren Umgang mit den Tieren führen kann. Die Futtervorrichtung ist ohne weitere Maschinen oder Geräte zu nutzen, leicht bedienbar und wiederverwendbar.

### Beschreibung

Ausführungsbeispiele und Einsatzbeispiele der Erfindung sind in den Zeichnungen dargestellt und werden im folgenden näher beschrieben.

Es zeigen:
- Figur 1:: einen Querschnitt durch eine mögliche Futtervorrichtung
- Figur 2:: einen Querschnitt durch mögliche Versteifungsträger
- Figur 3:: einen Querscnitt durch mögliche Aufwerfungen um das Futterloch
- Figur 4:: einen Querschnitt durch mögliche Abweiser
- Figur 5:: ein Ausführungsbeispiel in Kugelform
- Figur 6:: eine Möglichkeit der Abweiseranbringung bei Bodennutzung, Zylinderform
- Figur 7:: eine weitere Möglichkeit der Abweiseranbringung bei Bodennutzung, Zylinderform
- Figur 8:: eine Anbringungsmöglichkeit beispielhaft an einem Pfosten
- Figur 9:: eine Anbringungsmöglichkeit beispielhaft an zwei Pfosten
- Figur 10:: eine Anbringungsmöglichkeit längsseits eines Zaunes
- Figur 11:: Seitenansicht von Figur 10

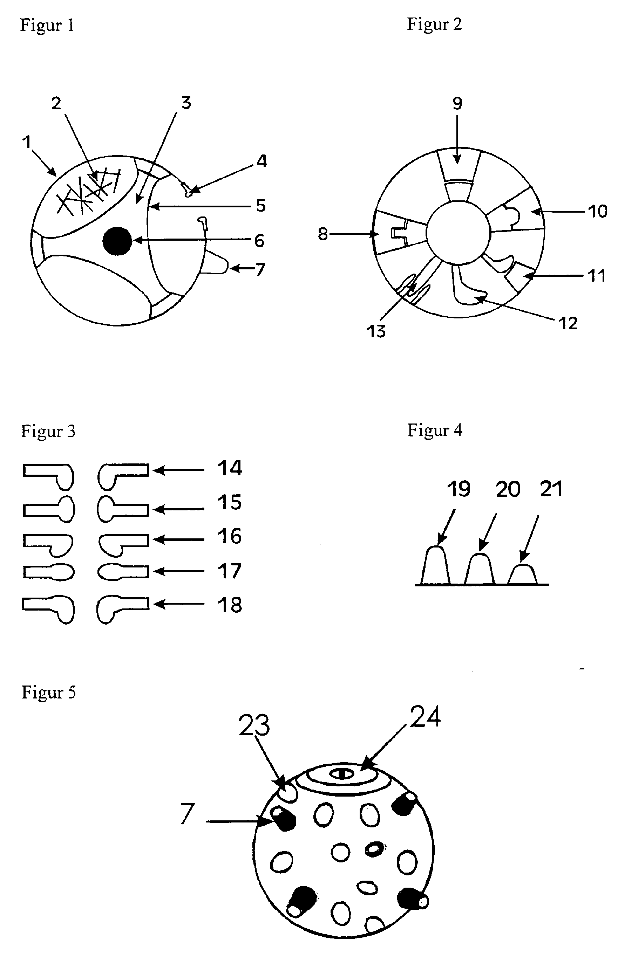

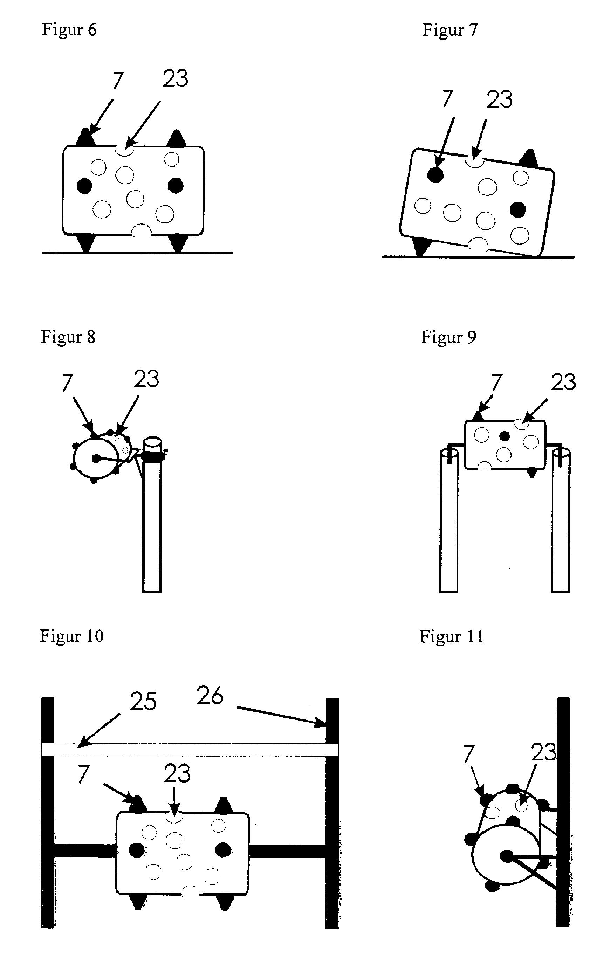

Die Futtervorrichtung kann aus einem festen Behälter bestehen oder aber auch aus einzelnen Teilen zusammengesetzt werden. Die Futtervorrichtung bzw. der Behälter kann verschiedene Formen annehmen, zu bevorzugen sind Kugel- (Figur 5) oder die Zylinderform (Figuren 6-11). Die Außenhaut (1) sollte aus einem splitterfreien Material bestehen. Um mehr Sicherheit zu erreichen, könnte diese doppelwandig sein und mit einem bestimmten Luftdruck versehen werden. Der Raum für das Futter (2) kann aus der Außenwand und den Stabilisatoren gebildet werden. In der Mitte sollte sich ein Kern (3) befinden, der die Aufgabe hat, der Futtervorrichtung Stabilität zu geben, durch seine Form und Größe die maximale Futtermenge zu beeinflussen und das Futter nicht auf den tiefsten Punkt in der Futtervorrichtung fallen zu lassen. Der Kern (3) kann fest mit der Außenwand verbunden sein, lose eingefügt werden oder wie bespielhaft in Figur 2 (8-13)dargestellt, aus verschiedenen Teilen von der Außenwand zum Inneren bestehen. Dabei kann die Speichenanzahl von 0 bis unendlich reichen. Die Futtervorrichtung könnte über eine Welle o.ä. befestigt werden. Die Entnahme- bzw. Futteröffnungen (4, 23) sollten aufgeworfen sein, um das Risikon von Schnittverletzung zu verringern. Beispielhaft ist dies in Figur 3 (14-18 im Querschnitt) gezeigt. Die Größe der Futteröffnungen ist abhängig von der Tierart, dem Alter des Tieres bzw. der Größe von Maul, Huf und Klaue. Abstandshalter bzw. Abweiser (7) wie beispielhaft in Figur 4 (19-21) im Querschnitt gezeigt, haben die Aufgabe, die Futtervorrichtung vom Boden fern zu halten, um Verunreinigungen des Futters zu verringern. Bei bodenferner Nutzung können sie dem Tier als Erleichterung dienen, die Futtervorrichtung zu bewegen. Abweiser können fest mit der Futtervorrichtung verbunden sein, fehlen oder lösbar, z.B. durch Schraubverbindungen sein. Wie Figur 7 zeigt, können die Abstandshalter 7 versetzt zueinander angeordnet werden, sodass eine kontinuierliche Abrollbewegung des Behälters verhindert wird. Gemäß Figur 7 sind die Abstandshalter 7 so angeordnet, dass zwei ringförmige Anordnungen von Abstandshaltern um den Umfang des zylindrischen Behälters axial zueinander beabstandet vorgesehen sind. Bei jeder ringförmigen Anordnung von Abstandshaltern sind die Abstandshalter 7 beabstandet zu einander um den Umfang verteilt, wobei die Abstandshalter 7 in den beiden ringförmigen Anordnungen so zueinander versetzt sind, dass bei beiden Anordnungen keine Abstandshalter an den selben Winkelpositionen vorgesehen sind. Dadurch wird erreicht, dass der Behälter bei Drehung um seine Längsachse, wenn er über den Boden rollt zusätzlich eine Kippbewegung vollführt, wodurch die kontinuierliche Rotation um die Längsachse erschwert bzw. gebremst wird, wenn der Behälter über den Boden rollt. So wird verhindert, dass der Behälter zu weit rollt.

Die Figuren 5-7 stellen die Bodennutzung der Futtervorrichtung dar. Die Figuren 8-10 zeigen beispielhafte Anbringungsmöglichkeiten der Futtervorrichtung (25 = Elektroband, 26= Zaunpfahl). Um einen leichteren Transport zu ermöglichen, können entsprechende Ausbuchtungen zum Tragen (siehe 24) oder Anbringungsmöglichkeiten für Gurte o.ä. geschaffen werden. Die Befüllung der Vorrichtung kann z.B. am Kopfende durch Deckel (24) mit mindestens einem Spannverschluß oder Drehverschluß o.ä. erfolgen. Öffnungen sind auch längsseits möglich, beispielhaft können das wiedereinsetzbare Teile, Türen o.ä. sein.

## Patentansprüche

1. Futtervorrichtung zum Füttern von Raufutter mit einem Behälter zur Aufnahme des Raufutters, in dessen Außenhaut (1) Entnahmeöffnungen (4; 23) zur Entnahme des Raufutters ausgebildet sind, **dadurch gekennzeichnet, dass**
die Futtervorrichtung bewegbar ist und die Entnahmeöffnungen (4 ; 23) derart geformt und dimensioniert sind, dass Raufutter nicht von selbst aus dem Behälter herausfallen kann und die Entnahmeöffnungen (4 ; 23) an Maulform- und -größe des Tieres, zu dessen Fütterung die Futtervorrichtung vorgesehen ist, angepasst sind, so dass das Raufutter für das Tier mit dem Maul durch die Entnahmeöffnungen (4 ; 23) entnehmbar ist.

2. Futtervorrichtung nach Anspruch 1, **dadurch gekennzeichnet, dass** im Inneren des Behälters Sperren (3, 8-13) angeordnet sind, die verhindern, dass das Raufutter auf dem tiefsten Punkt der Futtervorrichtung zu liegen kommt.

3. Futtervorrichtung nach Anspruch 1 oder 2, **dadurch gekennzeichnet, dass** an dem Behälter an dessen Außenumfang Abstandshalter (7) ausgebildet sind.

4. Futtervorrichtung nach einem der vorangehenden Ansprüche, **dadurch gekennzeichnet, dass** die Entnahmeöffnungen an ihren Kanten abgerundet ausgebildet sind 14-18).

5. Futtervorrichtung nach einem der vorangehenden Ansprüche, **dadurch gekennzeichnet, dass** zumindest eine Befestigungseinrichtung zum beweglichen Befestigen des Behälters, beispielsweise durch eine Welle vorgesehen ist.

6. Futtervorrichtung nach einem der vorangehenden Ansprüche, **dadurch gekennzeichnet, dass** der Behälter zylindrisch ausgebildet ist.

7. Futtervorrichtung nach einem der vorangehenden Ansprüche, **dadurch gekennzeichnet, dass** der Behälter um eine Längsachse drehbar ist.

8. Futtervorrichtung nach einem der vorangehenden Ansprüche, **dadurch gekennzeichnet, dass** der Behälter an einer Halteeinrichtung bewegbar, insbesondere drehbar gelagert ist.

9. Futtervorrichtung nach einem der vorangehenden Ansprüche, **dadurch gekennzeichnet, dass** der Behälter zumindest eine Befüllöffnung zum Einfüllen von Raufutter aufweist.
